# EUROPÄISCHE PATENTANMELDUNG

(11) **EP 2 316 562 A1**
(43) Veröffentlichungstag der Anmeldung: **04.05.2011**
(21) Anmeldenummer: 09174499.5
(22) Anmeldetag: 29.10.2009
(51) Int. Cl.: B01F 7/04, B01F 15/02, B29B 7/44, B29B 7/58, B29B 13/10, B29C 47/10, B29C 47/58, F26B 17/20, B01F 15/06, B01F 13/10

(54) **Vorrichtung und Verfahren zur Behandlung eines Schüttguts**

(71) Anmelder: Bühler AG, 9240 Uzwil (CH)
(72) Erfinder: Klein, Frieder, 8274, Tägerwilen (CH); Palaz, Kasim, 9200, Gossau (CH)
(74) Vertreter: Wilming, Martin

(57) **Zusammenfassung**

Die Vorrichtung weist ein in einem Mischbereich (7) im Wesentlichen zylindrisches Gehäuse (2) auf. Dieses enthält zumindest einen Austrittskanal (15) mit einer Austrittsöffnung (6) im Mischbereich (7) und zumindest eine drehbar gelagerte Mischerwelle (4) mit zumindest einem Auswurfelement (3) mit einer Wirkfläche (8). Das Auswurfelement (3) ist bei bestimmungsgemässen Gebrauch an der Austrittsöffnung (6) vorbeiführbar, wobei eine Projektion der Wirkfläche (8) parallel zur Austrittskanalachse auf die Austrittsöffnung (6) den kleinsten Austrittskanalquerschnitt zumindest einmal pro Umdrehung des Auswurfelements (3) zumindest zu 45%, bevorzugt zumindest zu 50%, besonders bevorzugt zumindest zu 55% und ganz besonders bevorzugt zumindest zu 60% abdeckt. Bevorzugt deckt die Projektion der Wirkfläche (8) parallel zur Austrittskanalachse auf die Austrittsöffnung (6) den kleinsten Austrittskanalquerschnitt einmal pro Umdrehung diesen zumindest zu 50%, besonders bevorzugt zumindest zu 55% und ganz besonders bevorzugt zumindest zu 60% ab.

## Beschreibung

Die vorliegende Erfindung betrifft das Gebiet der Behandlung, insbesondere der Mischung, eines Schüttguts mit den Merkmalen der Oberbegriffe der unabhängigen Ansprüche.

Aus der EP 0 303 929 ist eine Zerkleinerungs- und Mischvorrichtung zum Aufbereiten von thermoplastischem Kunststoffgut bekannt, wobei das aufbereitete Kunststoffgut in einen Schneckenextruder transportiert wird. Diese vorbekannte Vorrichtung weist einen Aufnahmebehälter mit einem um die Behälterachse drehenden Zerkleinerungs- und Mischwerkzeug auf. Dieses ist nahe dem Behälterboden angebracht. Der Aufnahmeebhälter weist eine Öffnung in seinem Mantel auf, durch die ein Schneckenextruder in Strömungsverbindung mit dem Aufnahmebehälter steht. Die Öffnung mündet angenähert tangential in den Mantel des Aufnahmebehälters. Eine Schnecke des Schneckenextruders wird zumindest nahe an die Innenwand des Aufnahmebehälters geführt. Das Zerkleinerungs- und Mischwerkzeug ist axial von der Öffnung beabstandet.

Diese vorbekannte Vorrichtung zur Zerkleinerung und Mischung eines Kunststoffguts weist aber den Nachteil auf, dass der Massendurchsatz aus dem Aufnahmebehälter in den Extruder heutigen Anforderungen oft nicht genügt, sofern eine blosse Mischung bei hohem Durchsatz gewünscht ist. Weiterhin ist die konstruktive Ausgestaltung der Heranführung der Schnecke des Schneckenextruders nahe an die Innenwand des Aufnahmebehälters aufwändig. Somit ist diese Lösung sehr kostspielig.

Es ist daher eine Aufgabe der vorliegenden Erfindung, die Nachteile des Bekannten zu vermeiden, insbesondere also eine Vorrichtung und ein Verfahren bereitzustellen, mit denen ein Schüttgut kostengünstig und mit hohem Materialdurchsatz behandelbar, insbesondere mischbar, ist.

Unter Materialdurchsatz wird hier im Sinne der Anmeldung eine ausreichende Behandlung, insbesondere Mischung, von Material verstanden, angegeben beispielsweise in Kilogramm pro Stunde oder Tonnen pro Stunde.

Unter Behandlung eines Schüttguts wird im Sinne der Anmeldung beispielsweise eine Mischung, eine Beaufschlagung mit Dampf, insbesondere Wasserdampf, oder auch eine thermische Behandlung des Schüttguts verstanden. Diese Behandlungen können einzeln oder auch in beliebiger Kombination durchgeführt werden.

Diese Aufgaben werden durch eine Vorrichtung sowie ein Verfahren gemäss dem kennzeichnenden Teil der unabhängigen Ansprüche gelöst.

Die erfindungsgemässe Vorrichtung weist ein in einem Mischbereich im Wesentlichen zylindrisches Gehäuse auf. Dieses enthält zumindest einen Austrittskanal mit einer Austrittsöffnung im Mischbereich und zumindest eine drehbar gelagerte Mischerwelle mit zumindest einem Auswurfelement mit einer Wirkfläche. Das Auswurfelement ist bei bestimmungsgemässem Gebrauch an der Austrittsöffnung vorbeiführbar, wobei eine Projektion der Wirkfläche parallel zur Austrittskanalachse auf die Austrittsöffnung den kleinsten Austrittskanalquerschnitt zumindest einmal pro Umdrehung des Auswurfelements zumindest zu 45% abdeckt. Bevorzugt deckt die Projektion der Wirkfläche parallel zur Austrittskanalachse auf die Austrittsöffnung den kleinsten Austrittskanalquerschnitt einmal pro Umdrehung zumindest zu 50%, besonders bevorzugt zumindest zu 55% und ganz besonders bevorzugt zumindest zu 60% ab.

Als Austrittskanalachse wird im Sinne der Anmeldung eine Längsachse eines symmetrischen Kanals, beispielsweise mit kreisförmigem, elliptischem oder rechteckigen Querschnitt, senkrecht auf der Querschnittsfläche verstanden. Im Falle nicht-symmetrischer Kanäle wird als Austrittskanalachse eine derartige Längsachse verstanden, die im Wesentlichen parallel zur mittleren Strömungsrichtung eines im Kanal strömenden Schüttguts liegt.

Als kleinster Austrittskanalquerschnitt wird im Sinne der Anmeldung der kleinste Querschnitt des Austrittskanals entlang der Austrittskanalachse verstanden.

Als Schüttgut, das auch im Sinne der Anmeldung rieselfähige Produkte einschliesst, können beispielsweise Getreidemehle, ganze Getreidekörner, Getreidefasern, pflanzliche oder tierische Proteine, reine Stärkemehle sowie Kleie behandelt werden. Es ist aber auch beispielsweise möglich, Kunststoff-Granulat in der Vorrichtung zu behandeln.

Im Sinne der Anmeldung wird unter einer Wirkfläche eines Auswurfelements die Fläche des Auswurfelements verstanden, die bei bestimmungsgemässer Bewegung des Auswurfelements in der Vorrichtung den Hauptanteil, d.h. zumindest 90%, der Impulsübertragung auf das Schüttgut durch das Auswurfelement erzeugt. Eine Halterung des Auswurfelements ist beispielsweise nicht Teil der Wirkfläche.

Vorbeiführbar bedeutet im Sinne der Anmeldung, dass das Auswurfelement auf Höhe der Austrittsöffnung an der Mischerwelle angebracht ist und somit bei bestimmungsgemässem Gebrauch, beispielsweise bei Rotation des Auswurfelements, an der Austrittsöffnung während der Rotation vorbeigeführt wird.

Unter einem Mischbereich im Sinne der Anmeldung wird der Bereich der Vorrichtung verstanden, in dem die Mischerwelle Auswurfelemente und / oder Mischelemente aufweist. In diesem Bereich ist das Gehäuse im Wesentlichen zylindrisch. Mit anderen Worten, ausserhalb dieses Bereichs kann die Vorrichtung beispielsweise auch einen rechteckigen Querschnitt oder auch Biegungen zur Führung des Schüttguts in den Mischbereich aufweisen.

Der Vorteil der erfindungsgemässen Vorrichtung liegt darin, dass ein in der Vorrichtung sich befindendes Schüttgut mit hohem Durchsatz aus der Vorrichtung durch die Austrittsöffnung transportiert werden kann. Es erfolgt eine Impulsübertragung auf das Schüttgut insbesondere auch teilweise parallel zur Austrittskanalachse durch die Bewegung des Auswurfelements, was zudem aufgrund der auf das Schüttgut wirkenden Fliehkraft zu einem erhöhten Durchsatz an Schüttgut durch die Austrittsöffnung führt, d.h. das Schüttgut wird ausgestossen.

Konstruktiv wird dies dadurch erreicht, dass der Austrittskanal im Wesentlichen tangential in dem Mischbereich an das im Wesentlichen zylindrische Gehäuse angebracht ist. Im Wesentlichen tangential hat hier die Bedeutung, dass die Austrittskanalachse keinen Schnittpunkt mit der Achse der Mischerwelle aufweist.

Bevorzugt weist die Mischerwelle zwei Auswurfelemente auf. Insbesondere weist die Mischerwelle drei Auswurfelemente, besonders bevorzugt vier Auswurfelemente und ganz besonders bevorzugt zumindest fünf Auswurfelemente auf.

Diese Ausgestaltung mit zumindest zwei Auswurfelementen hat den Vorteil, dass der Transport durch die Austrittsöffnung verbessert wird, das heisst unter anderem, dass der Materialdurchsatz durch die Vorrichtung erhöht wird.

Weiter bevorzugt ist die Mischerwelle beidseitig gelagert.

Dies hat den Vorteil, dass die Stabilität der Mischerwelle durch die beidseitige Lagerung erhöht wird, wodurch diese entweder schneller drehen kann oder mehr Auswurfelemente und / oder Mischelemente aufweisen kann zur verbesserten, das heisst insbesondere schnelleren Behandlung des Schüttguts. Hierdurch wird eine Erhöhung des Durchsatzes durch die Vorrichtung erreicht.

Weiter besonders bevorzugt schliesst eine Flächensenkrechte der Wirkfläche zumindest eines Auswurfelements einen Winkel von im Wesentlichen 90° mit der Achse der Mischerwelle ein.

Unter einer Flächensenkrechte einer Wirkfläche wird hier und im Folgenden die Senkrechte auf der Wirkfläche verstanden.

Diese Orientierung der Wirkfläche in Relation zur Mischerwelle hat den Vorteil, dass der Transport des Schüttguts durch die Austrittsöffnung weiter verbessert wird.

Bevorzugt ist die Wirkfläche zumindest eines Auswurfelements senkrecht zum Radius des zylindrischen Gehäuses in Rotationsrichtung oder entgegengesetzt der Rotationsrichtung des Auswurfelements beabstandet.

Dies hat den Vorteil, dass der Transport des Schüttguts durch den Austrittskanal weiter verbessert wird.

Insbesondere bevorzugt schliesst die Flächensenkrechte der Wirkfläche zumindest eines Mischelements einen Winkel kleiner 90° mit der Achse der Mischerwelle ein. Bevorzugt schliesst die Flächensenkrechte mit der Achse der Mischerwelle einen Winkel von 45° bis 85° ein.

Diese Anordnung der Wirkfläche eines Mischelements relativ zur Achse der Mischerwelle hat den Vorteil, dass das Schüttgut entlang der Achse der Mischerwelle transportiert wird. Durch diese Anordnung wird also das Schüttgut simultan behandelt, insbesondere gemischt, und entlang der Achse der Mischerwelle transportiert.

Bevorzugt weist die Mischerwelle zumindest zwei parallel zur Achse der Mischerwelle beabstandete Auswurfelemente und Mischelemente auf.

Der Vorteil der Anordnung von zumindest zwei Auswurfelementen und Mischelementen, die parallel zur Achse der Mischerwelle beabstandet sind, hat den Vorteil, dass diese jeweils unterschiedliche Orientierungen der Flächensenkrechte zur Achse der Mischerwelle aufweisen. Die einzelnen Mischelemente und Auswurfelemente können daher darauf optimiert werden, das Schüttgut zu mischen und entlang der Achse der Mischerwelle zu transportieren oder auch den Transport des Schüttguts durch die Austrittsöffnung zu verbessern.

Weiterhin begrenzen die Mischelemente stromaufwärts der Austrittsöffnung die Möglichkeit des Transports von Schüttgut stromaufwärts von der Austrittöffnung, d.h. diese stellen einen Strömungswiderstand für das Schüttgut in der Vorrichtung stromaufwärts dar.

Ganz besonders bevorzugt weist zumindest ein Auswurfelement eine Wirkfläche auf, die die parallel zur Mischerwelle grösser als die Austrittsöffnung ist.

Dies hat den Vorteil, dass der Transport des Schüttguts durch die Austrittsöffnung weiter verbessert wird.

In einer weiteren besonders bevorzugten Ausführungsform ist ein Extruder benachbart zur Austrittsöffnung angeordnet und mit dieser derart verbunden, so dass ein Schüttgut von der Vorrichtung zum Extruder führbar ist.

Diese Anordnung der Vorrichtung benachbart zum Extruder hat den Vorteil, dass das Schüttgut vor Eintritt in den Extruder in der Vorrichtung behandelt, insbesondere gemischt werden kann. Die erfindungsgemässe Vorrichtung wird deshalb auch als Vorkonditionierer bezeichnet. Durch diese Behandlung des Schüttguts in der Vorrichtung vor Eintritt in den Extruder ist es möglich, das Schüttgut für die Extrusion vorzubereiten.

Weiter ganz besonders bevorzugt schliesst die Längsachse des Extruders einen Winkel von 60° bis 120° mit der Achse der Mischerwelle ein. Insbesondere liegt dieser Winkel in einem Bereich von 70° bis 110°, besonders bevorzugt von 80° bis 100° und ganz besonders bevorzugt von im Wesentlichen 90°.

Diese Anordnung von Vorrichtung und Extruder hat den Vorteil, dass eine derartige Anordnung einen sehr geringen Abstand zwischen der Vorrichtung und dem nachgeordneten Extruder erlaubt. Durch diese Anordnung wird insbesondere erreicht, dass der Extruder nur im Bereich der Austrittsöffnung eine Öffnung aufweisen muss und damit das Gehäuse des Extruders nur hier in der Stabilität geschwächt wird. Im Stand der Technik ist es demgegenüber erforderlich, dass Gehäuse des Extruders parallel zur Längsachse des Extruders zu modifizieren und damit zu schwächen, um den geringen Abstand zwischen der Vorrichtung und dem Extruder zu erreichen, da hier eine parallele Anordnung verwendet wird.

Weiter ganz besonders bevorzugt weist eine Flanke einer Extruderwelle senkrecht zur Extruderwelle zum radial äussersten Punkt des Auswurfelements zumindest einmal pro Umdrehung einen minimalen Abstand von nicht mehr als 20mm auf. Bevorzugt ist dieser minimale Abstand nicht mehr als 10mm, ganz besonders bevorzugt beträgt dieser minimale Abstand nicht mehr als zumindest 5mm und weiter insbesondere bevorzugt zumindest 1mm.

Die Flanke einer Extruderwelle ist im Sinne der Anmeldung der äussere Radius im Bereich der Vorrichtung.

Dieser geringe Abstand hat den Vorteil, dass sich in dem Bereich zwischen Austrittsöffnung der Vorrichtung und Extrudereintrittsöffnung nur ein geringes Volumen an Schüttgut ansammeln kann. Dieses Volumen stellt eine so genannte Produktbrücke dar, die möglichst klein sein soll, um Verklumpungen und / oder Verstopfungen zu vermeiden, was im Stand der Technik aber kaum erreichbar ist.

Ganz besonders bevorzugt ist die Vorrichtung derart ausgestaltet, dass das Innere des Gehäuses mit Dampf beaufschlagbar ist. Das Innere des Gehäuses ist insbesondere mit Wasserdampf beaufschlagbar.

Dies hat den Vorteil, dass das Schüttgut in der Vorrichtung zusätzlich zum Mischen und Transportieren im Hinblick auf die nachfolgende Extrusion optimiert vorbehandelt werden kann. Alternativ oder zusätzlich ist es beispielsweise auch möglich, das Innere des Gehäuses mit Öl oder anderen Flüssigkeiten oder auch Dämpfen dieser Flüssigkeiten zu beaufschlagen.

In einer weiteren besonders bevorzugten Ausführungsform weist die Vorrichtung eine Temperaturkontrolleinrichtung auf. Die Vorrichtung weist insbesondere eine Heizeinrichtung auf.

Dies hat den Vorteil, dass das Schüttgut durch die Temperaturkontrolleinrichtung auf eine optimale Temperatur zum Behandeln des Schüttguts in der Vorrichtung eingestellt werden kann im Hinblick auf den nachfolgenden Extrusionsschritt.

Ein weiterer Aspekt der Erfindung ist gerichtet auf ein Verfahren zur Mischung eines Schüttguts mit einer Vorrichtung, insbesondere wie oben beschrieben. In einem ersten Schritt wird Schüttgut in die Vorrichtung eingefüllt. Die Vorrichtung weist dabei ein in einem Mischbereich im Wesentlichen zylindrisches Gehäuse auf, welches zumindest einen Austrittskanal mit einer Austrittsöffnung im Mischbereich enthält. Weiterhin weist die Vorrichtung zumindest eine drehbar gelagerte Mischerwelle mit zumindest einem Auswurfelement mit einer Wirkfläche auf. Das Auswurfelement wird bei bestimmungsgemässem Gebrauch an der Austrittsöffnung vorbeigeführt, wobei eine Projektion der Wirkfläche parallel zur Austrittskanalachse auf die Austrittsöffnung den kleinsten Austrittskanalquerschnitt zumindest einmal pro Umdrehung des Auswurfelements zumindest zu 45% abdeckt. Bevorzugt deckt die Projektion der Wirkfläche parallel zur Austrittskanalachse auf die Austrittsöffnung den kleinsten Austrittskanalquerschnitt einmal pro Umdrehung zumindest zu 50%, besonders bevorzugt zumindest zu 55% und ganz besonders bevorzugt zumindest zu 60% ab. Anschliessend erfolgen das Mischen des Schüttguts in der Vorrichtung sowie das Transportieren des gemischten Schüttguts zu einer Austrittsöffnung hin. Nachfolgend wird das gemischte Schüttgut aus der Vorrichtung ausgebracht mittels des Auswurfelements.

Dieses Verfahren wird bevorzugt mit der oben beschriebenen Vorrichtung durchgeführt und weist damit alle oben beschriebenen Vorteile der Vorrichtung auf.

Bevorzugt wird das aus der Vorrichtung ausgebrachte gemischte Schüttgut in einen Extruder transportiert.

Ein weiterer Aspekt der Erfindung ist gerichtet auf das Aufrüsten oder Umrüsten einer bestehenden Anlage zur Verarbeitung von Rohmaterialien, insbesondere Schüttgut, vorzugsweise einer Extrusionsanlage, mit einer oben beschriebenen Vorrichtung.

Dieses Verfahren hat den Vorteil, dass bereits sich in Betrieb befindende Anlagen auf den neuesten Stand der Technik gebracht werden können. Es können also Anlagen, die bisher keine erfindungsgemässe Vorrichtung aufweisen, mit einer entsprechenden Vorrichtung aufgerüstet werden. Weiterhin können Anlagen, die bereits eine Vorrichtung gemäss dem Stand der Technik aufweisen, mit der erfindungsgemässen Vorrichtung umgerüstet werden.

Ein zusätzlicher Aspekt der Erfindung ist gerichtet auf die Verwendung der oben beschriebenen Vorrichtung als Konditionierer für Extrusionsanlagen.

Diese Verwendung als Konditionierer für Extrusionsanlagen hat den Vorteil, dass das in der Extrusionsanlage zu behandelnde Schüttgut im Konditionierer vorbehandelt werden kann, so dass das Schüttgut für ein optimales Extrusionsergebnis vorbereitet ist.

Die Erfindung wird nachfolgend an Hand von Ausführungsbeispielen zum besseren Verständnis näher erläutert, ohne dass die Erfindung auf die Ausführungsbeispiele zu beschränken ist.
- Figur 1:: Schnitt durch eine erfindungsgemässe Vorrichtung;
- Figur 2:: perspektivische Darstellung einer erfindungsge- mässen Vorrichtung;
- Figur 3:: schematische Darstellung einer Mischerwelle mit zwei Auswurfelementen;
- Figur 4:: schematische Darstellung einer erfindungsgemässen Vorrichtung mit einem nachgeordneten Extruder;
- Figur 5:: schematische Darstellung einer Draufsicht auf ei- ne erfindungsgemässe Vorrichtung mit nachgeordne- tem Extruder.
- Figur 6:: schematische Darstellung einer erfindungsgemässen Vorrichtung mit einer nachgeordneten Extruderwel- le;
- Figur 7:: perspektivische Darstellung einer erfindungsge- mässen Mischerwelle

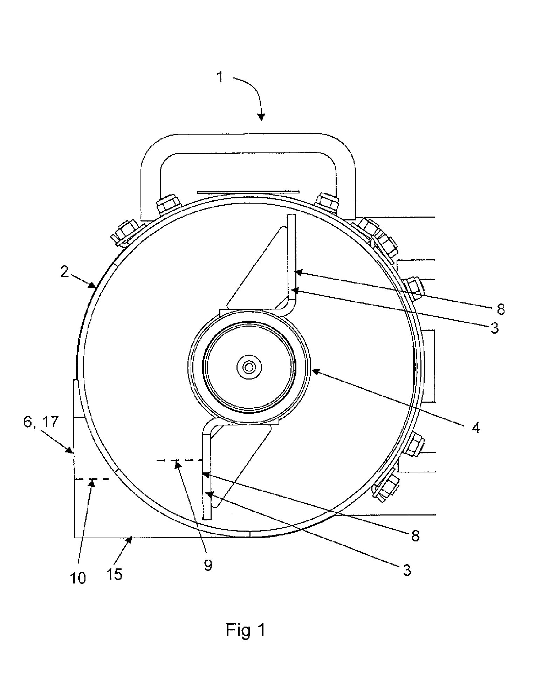

Figur 1 zeigt einen Schnitt durch einen Mischbereich einer erfindungsgemässen Vorrichtung 1. Die Vorrichtung 1 weist im Querschnitt ein im Wesentlichen kreisförmiges Gehäuse 2 auf mit einer Mischerwelle 4. An dieser Mischerwelle 4 sind zwei Auswurfelemente 3 mit Wirkflächen 8 angebracht. Die Wirkflächen 8 weisen eine Flächensenkrechte 9 auf. Das Gehäuse 2 weist weiterhin einen Austrittskanal 15 mit Austrittskanalachse 10 und einer Austrittsöffnung 6 mit dem Austrittskanalquerschnitt 17 auf. Die Wirkfläche 8 des Auswurfelements 3 deckt hier 50% des kleinsten Austrittskanalquerschnitts 17, d.h. hier der Austrittsöffnung 6, ab, wenn die Wirkfläche 3 parallel zur Austrittskanalachse 10 auf die Austrittsöffnung 6 projiziert wird, wenn die Flächensenkrechte 9 und Austrittskanalachse 10 parallel zueinander liegen.

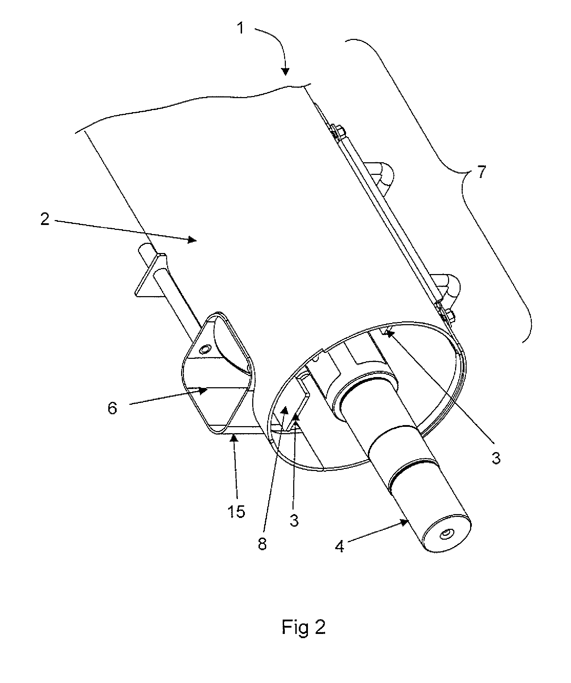

Figur 2 zeigt in perspektivischer Darstellung einen Ausschnitt der erfindungsgemässen Vorrichtung 1. Das Gehäuse 2 ist im Wesentlichen zylindrisch ausgebildet in dem hier dargestellten Mischbereich 7. Ein Austrittskanal 15 mit im Wesentlichen quadratischem Querschnitt weist eine Austrittsöffnung 6 auf. Eine Mischerwelle 4 weist im Bereich der Austrittsöffnung 6 zwei Auswurfelemente 3 mit Wirkfläche 8 auf.

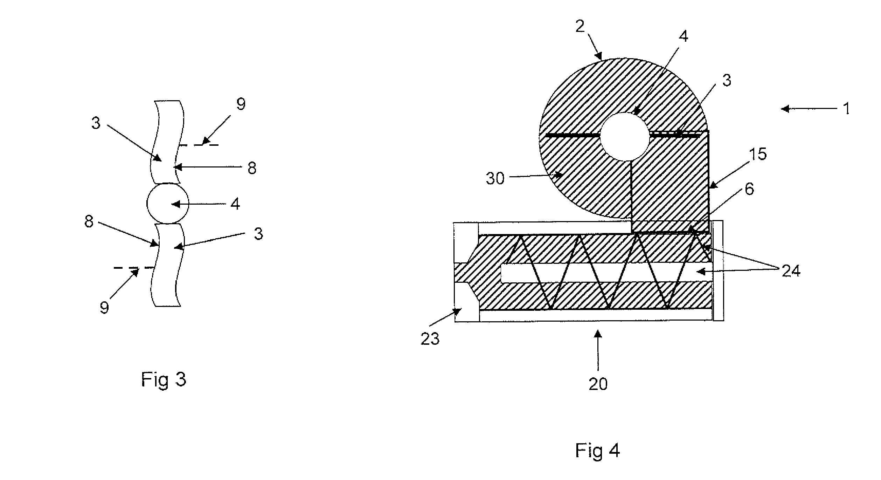

Figur 3 zeigt schematisch eine Mischerwelle 4 mit zwei Auswurfelementen 3. Diese weisen jeweils gewölbte Wirkflächen 8 auf mit den Flächensenkrechten 9.
Figur 4 zeigt schematisch eine Vorrichtung 1 mit nachgeordnetem Extruder 20. Die Vorrichtung 1 weist ein im Wesentlichen kreisförmiges Gehäuse im Querschnitt auf mit einer Mischerwelle 4. Diese Mischerwelle 4 weist zwei Auswurfelemente 3 auf. Weiterhin weist die Vorrichtung 1 einen Austrittskanal 15 mit einer Austrittsöffnung 6 auf. Diese Austrittsöffnung 6 ist so mit dem Extruder verbunden, dass das Schüttgut 30 von der Vorrichtung 1 in den Extruder 20 transportiert werden kann.

Das Schüttgut 30 wird also in der Vorrichtung 1 in einem ersten Schritt gemischt und in dem Bereich der Vorrichtung transportiert, in dem der Austrittskanal 15 an der Vorrichtung 1 angebracht ist. Das Schüttgut wird daraufhin im Wesentlichen durch die Auswurfelemente 3 in den Austrittskanal 15 transportiert. Dadurch wird das Schüttgut 30 durch die Austrittsöffnung 6 in den Extruder 20 transportiert. Im Extruder 20 wird das Schüttgut 30 mittels der Extruderwelle 24 entlang der Längsachse der Extruderwelle 24 zur Düse 23 transportiert und dort extrudiert.

Die Längsachse des Extruders und die Achse der Mischerwelle 4 schliessen einen Winkel von im Wesentlichen 90° ein.

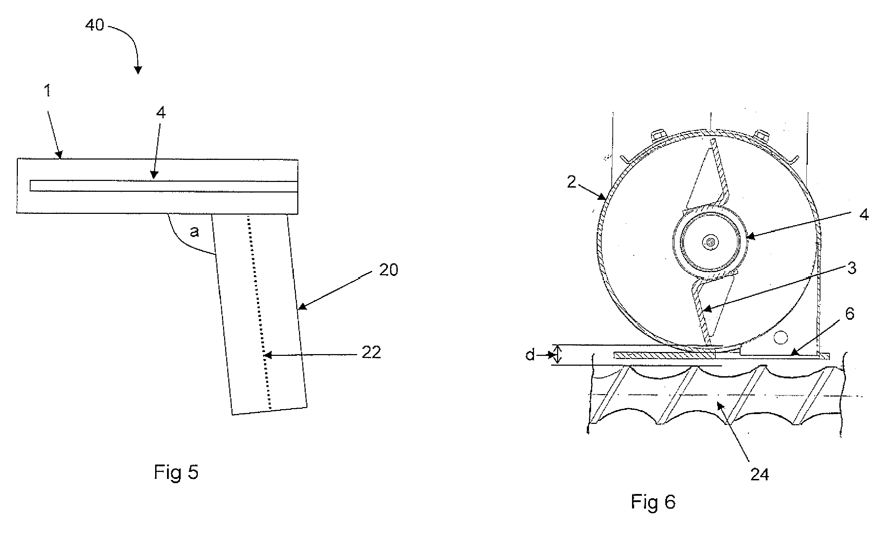

Figur 5 zeigt eine Draufsicht auf eine Anlage 40 mit einer erfindungsgemässen Vorrichtung 1 und nachgeordnetem Extruder 20. Die Vorrichtung 1 weist eine Mischerwelle 4 auf. Der Extruder 20 mit der Längsachse 22 weist einen Winkel a von 95° zwischen der Achse der Mischerwelle 4 und der Längsachse 22 des Extruders 20 auf.

Eine Austrittsöffnung der Vorrichtung 1 und eine Eintrittsöffnung des Extruders 20 sind hier nicht gezeigt.

Figur 6 zeigt schematisch eine erfindungsgemässe Vorrichtung 1 mit nachgeordneter Extruderwelle 24. Gleiche Referenzen in Figur 6 bezeichnen gleiche Komponenten wie in Figur 1 verwendet.

Eine Flanke der Extruderwelle 24, d.h. der äussere Radius im Bereich der Vorrichtung 1, ist senkrecht zur Extruderwelle 24 zum radial äussersten Punkt des Auswurfelements 3 zumindest einmal pro Umdrehung um nicht mehr als einen Abstand d von 10 mm beabstandet.

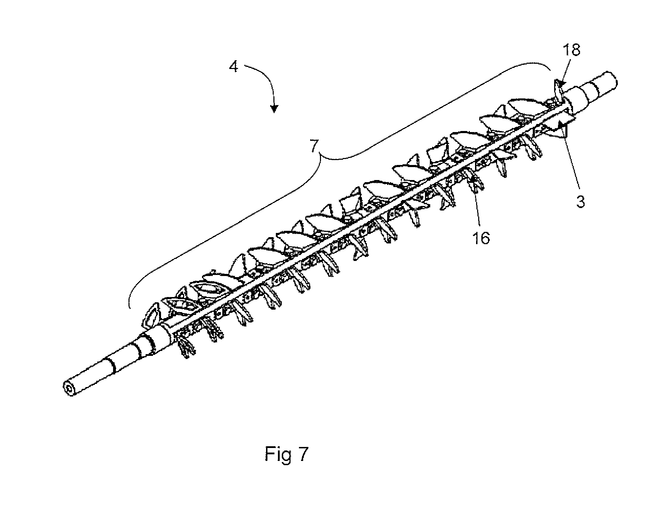

Figur 7 zeigt perspektivisch eine Mischerwelle 4 im Mischbereich 7. Die Mischerwelle 4, die Teil der hier nicht gezeigten Vorrichtung mit einer Austrittsöffnung ist, weist Mischelemente 16 zum Mischen und Transportieren von hier nicht gezeigtem Schüttgut auf. Weiterhin weist die Mischerwelle 4 ein Auswurfelement 3 auf zum verbesserten Transport von Schüttgut aus der Vorrichtung durch die Austrittsöffnung. Ein Rücktransportelement 18 ist dazu geeignet, Schüttgut, welches an einer Austrittsöffnung vorbei transportiert wurde, in den Bereich der Austrittsöffnung zurückzutransportieren.

## Patentansprüche

1. Vorrichtung (1) zur Behandlung, insbesondere Mischung, eines Schüttguts (30), mit einem in einem Mischbereich (7) im Wesentlichen zylindrischen Gehäuse (2), enthaltend zumindest einen Austrittskanal (15) mit einer Austrittsöffnung (6) im Mischbereich (7);
zumindest eine drehbar gelagerte Mischerwelle (4) mit zumindest einem Auswurfelement (3) mit einer Wirkfläche (8), **dadurch gekennzeichnet, dass** das Auswurfelement (3) bei bestimmungsgemässem Gebrauch an der Austrittöffnung (6) vorbeiführbar ist, wobei eine Projektion der Wirkfläche (8) parallel zur Austrittskanalachse (10) auf die Austrittsöffnung (6) den kleinsten Austrittskanalquerschnitt (17) zumindest einmal pro Umdrehung des Auswurfelements (3) zumindest zu 45%, bevorzugt zumindest zu 50%, besonders bevorzugt zumindest zu 55% und ganz besonders bevorzugt zumindest zu 60% abdeckt.

2. Vorrichtung (1) nach Anspruch 1, **dadurch gekennzeichnet, dass** die Mischerwelle (4) zwei Auswurfelemente (3), bevorzugt drei Auswurfelemente (3), besonders bevorzugt vier Auswurfelemente (3) aufweist und ganz besonders bevorzugt zumindest fünf Auswurfelemente (3) aufweist.

3. Vorrichtung (1) nach einem der Ansprüche 1 bis 2, **dadurch gekennzeichnet, dass** eine Flächensenkrechte (9) der Wirkfläche (8) zumindest eines Auswurfelements (3) einen Winkel von im Wesentlichen 90° mit der Achse der Mischerwelle (4) einschliesst.

4. Vorrichtung (1) nach einem der Ansprüche 1 bis 3, **dadurch gekennzeichnet, dass** die Mischerwelle (4) zumindest ein Mischelement aufweist und die Flächensenkrechte (9) der Wirkfläche (8) zumindest eines Mischelements (16) einen Winkel kleiner 90°, bevorzugt von 45° bis 85°, mit der Achse der Mischerwelle (4) einschliesst.

5. Vorrichtung (1) nach einem der Ansprüche 1 bis 4, **dadurch gekennzeichnet, dass** zumindest ein Auswurfelement (3) eine Wirkfläche (8) aufweist, die parallel zur Mischerwelle (4) grösser als die Austrittöffnung (6) ist.

6. Vorrichtung (1) nach einem der Ansprüche 1 bis 5, **dadurch gekennzeichnet, dass** ein Extruder (20) benachbart zur Austrittsöffnung (6) angeordnet und mit dieser derart verbunden ist, so dass ein Schüttgut (30) von der Vorrichtung (1) zum Extruder (20) führbar ist.

7. Vorrichtung (1) nach Anspruch 6, **dadurch gekennzeichnet, dass** die Längsachse (22) des Extruders (20) einen Winkel von 60° bis 120°, bevorzugt von 70° bis 110°, besonders bevorzugt von 80° bis 100° und ganz besonders bevorzugt von im Wesentlichen 90° mit der Achse der Mischerwelle (4) einschliesst.

8. Vorrichtung (1) nach Anspruch 6 oder 7, **dadurch gekennzeichnet, dass** eine Flanke einer Extruderwelle (24) senkrecht zur Extruderwelle (24) zum radial äussersten Punkt des Auswurfelements (3) zumindest einmal pro Umdrehung einen minimalen Abstand von nicht mehr als 20 mm, bevorzugt nicht mehr als 10 mm, ganz besonders bevorzugt von nicht mehr als 5 mm und weiter insbesondere bevorzugt zumindest von 1 mm aufweist.

9. Vorrichtung (1) nach einem der Ansprüche 1 bis 8, **dadurch gekennzeichnet, dass** die Vorrichtung (1) derart ausgestaltet ist, dass das innere Gehäuse (2) mit Dampf, insbesondere Wasserdampf, beaufschlagbar ist.

10. Vorrichtung (1) nach einem der Ansprüche 1 bis 9, **dadurch gekennzeichnet, dass** die Vorrichtung (1) eine Temperaturkontrolleinrichtung (13), insbesondere eine Heizeinrichtung (14), aufweist.

11. Verfahren zur Behandlung, insbesondere Mischung, eines Schüttguts (30) mit einer Vorrichtung (1), insbesondere gemäss einem der Ansprüche 1 bis 10, **gekennzeichnet durch** die folgenden Schritte:
a) Einfüllen des Schüttguts (30) in die Vorrichtung (1), welche folgende Merkmale aufweist: ein in einem Mischbereich (7) im Wesentlichen zylindrisches Gehäuse (2), enthaltend zumindest einen Austrittskanal (15) mit einer Austrittsöffnung (6) im Mischbereich (7), zumindest eine drehbar gelagerte Mischerwelle (4) mit zumindest einem Auswurfelement (3) mit einer Wirkfläche (8), wobei das Auswurfelement (3) bei bestimmungsgemässem Gebrauch an der Austrittöffnung (6) vorbei geführt wird, und wobei eine Projektion der Wirkfläche (8) parallel zur Austrittskanalachse (15) auf die Austrittsöffnung (6) den kleinsten Austrittskanalquerschnitt (17) zumindest einmal pro Umdrehung des Auswurfelements (3) zumindest zu 45%, bevorzugt zumindest zu 50%, besonders bevorzugt zumindest zu 55% und ganz besonders bevorzugt zumindest zu 60% abdeckt;
b) Behandeln, insbesondere Mischen, des Schüttguts (30) in der Vorrichtung (1);
c) Transportieren des gemischten Schüttguts (30) zu einer Austrittsöffnung (6);
d) Ausbringen des gemischten Schüttguts (30) aus der Vorrichtung (1) mittels des Auswurfelements (3)

12. Verfahren nach Anspruch 11, **dadurch gekennzeichnet, dass** das Schüttgut (30) während des Mischens in der Vorrichtung (1) mit Dampf beaufschlagt wird und / oder in der Temperatur kontrolliert wird.

13. Verfahren nach Anspruch 11 oder 12, **dadurch gekennzeichnet, dass** das aus der Vorrichtung (1) ausgebrachte gemischte Schüttgut (30) in einen Extruder transportiert wird.

14. Verfahren zum Aufrüsten oder Umrüsten einer Anlage (40) zur Verarbeitung von Rohmaterialien, insbesondere Schüttgut (30), vorzugsweise einer Extrusionsanlage, **dadurch gekennzeichnet, dass** die Anlage (40) mit einer Vorrichtung gemäss einem der Ansprüche 1 bis 10 aufgerüstet oder umgerüstet wird.

15. Verwendung der Vorrichtung (1) gemäss einem der Ansprüche 1 bis 10, insbesondere zur Durchführung eines Verfahrens gemäss einem der Ansprüche 11 bis 13, als Konditionierer für Extrusionsanlagen.
